# EUROPÄISCHE PATENTSCHRIFT

(11) **EP 4 650 645 B1**
(45) Veröffentlichungstag und Bekanntmachung des Hinweises auf die Patenterteilung: **19.08.2026**
(21) Anmeldenummer: 25170070.4
(22) Anmeldetag: 11.04.2025
(51) Int. Cl.: F17C 1/00

(54) **VERFAHREN ZUR SPEICHERUNG EINES ENERGIETRÄGERS**
METHOD FOR STORING AN ENERGY CARRIER
PROCÉDÉ DE STOCKAGE D'UN SUPPORT D'ÉNERGIE

(30) Priorität: 14.05.2024 DE 102024113469
(43) Veröffentlichungstag der Anmeldung: 19.11.2025
(73) Patentinhaber: Forschungszentrum Jülich GmbH, 52425 Jülich (DE)
(72) Erfinder: Peschel, Andreas, 52428 Jülich (DE); Morsch, Philipp, 52249 Eschweiler (DE)
(74) Vertreter: Paul & Albrecht Patentanwälte PartG mbB

(56) Entgegenhaltungen:
- EP-A1- 4 357 232
- WO-A1-2017/168759
- DE-A1- 102011 113 368
- ES-A6- 2 010 434
- KR-B1- 100 482 573
- US-A1- 2009 320 356
- US-A1- 2017 174 599

## Beschreibung

Die vorliegende Erfindung betrifft ein Verfahren zur Speicherung eines Energieträgers, bei dem als Energieträger (Dimethylether) in flüssiger Form in einer Kaverne - DME-Kaverne - gespeichert wird.

Zum Ausgleich der über die Jahreszeiten fluktuierenden Verfügbarkeit erneuerbarer Energien und zur Aufrechterhaltung strategischer Energiereserven sind große Energiespeicher notwendig, in denen vor allem Öl und Erdgas gespeichert werden. In Deutschland wird hierzu in erster Linie auf Untergrundspeicher und hier im speziellen auf Salzkavernen, auch Kavernen genannt, zurückgegriffen, die vor allem im Norden Deutschlands zu finden sind. In diesen großvolumigen Untergrundspeichern (repräsentative Größe = 500.000 m³) können sowohl Gase als auch Flüssigkeiten bei hohem Druck (ca. 16 MPa) und moderaten Temperaturen ( ca. 40 °C) gespeichert werden.

Im Zuge der Umstellung der fossil geprägten Energielandschaft auf eine nachhaltige wasserstoffbasierte Infrastruktur besteht die Option, diese großvolumigen Untergrundspeicher auch zur Speicherung von Wasserstoff zu nutzen. Allerdings führt die geringe volumetrische Energiedichte von Wasserstoff (ca. 2,7 kWh/m³ bei 25 °C und atmosphärischem Druck) im Vergleich zu den deutlich höheren Energiedichten (ca. 9,1 kWh/m³ bei 25 °C und atmosphärischem Druck) für Methan/Erdgas dazu, dass deutlich größere Speichervolumina benötigt werden. Die Allianz "H2eart for Europe" schätzt die Lücke an benötigter Speicherkapazität auf 36 TWh. Betrachtet man die oben genannten Bedingungen von ca. 16 MPa Druck und Temperaturen von 40 °C, entspricht dies ca. 20 Mio. m³ Erdgas (40 Kavernen) beziehungsweise ca. 95 Mio. m³ Wasserstoff (190 Kavernen).

Mit anderen Worten werden unrealistisch große Speichervolumina benötigt, um die vorhandene Lücke in der bestehenden Speicherinfrastruktur durch Wasserstoffspeicher zu schließen. Die Alternative, Wasserstoff in flüssiger Form zu speichern, erhöht zwar die volumetrische Energiedichte signifikant, bedingt jedoch eine aufwendige und energieintensive Kühlung, da sich Wasserstoff erst bei ca. 20 K (ca. -253 °C) verflüssigt.

Ein Verfahren zur Speicherung eines Energieträgers der eingangs genannten Art ist aus der US 2009/320356 A1 bekannt. Bei diesem Verfahren wird als Energieträger DEM (Dimethylether) in flüssiger Form in einer Kaverne, nämlich eine Salzkaverne gespeichert.

Aufgabe der vorliegenden Erfindung ist es, ein Verfahren zur Speicherung eines Energieträgers anzugeben, welches die Möglichkeit bietet, große Mengen an Energie in einem moderaten Volumen zu speichern, und das zudem in eine wasserstoffbasierte Infrastruktur integrierbar ist. Dabei sollen auch ein Import und ein Export des Energieträgers möglich sein, um aufwendige chemische Wandlungsprozesse zu vermeiden.

Diese Aufgabe ist bei einem Verfahren der eingangs genannten Art dadurch gelöst, dass zur Aufrechterhaltung eines Überdrucks in der DME-Kaverne das DME mittels eines Inertgases, insbesondere mittels N₂ (Stickstoff), bedruckt wird, dass in der DME-Kaverne gespeichertes DME ausgespeichert und als Brennstoff bei endothermen Produktionsprozessen und/oder bei der Stromherstellung und/oder zur Herstellung von Wasserstoff via Reformierung eingesetzt wird, wobei freigesetztes CO₂ (Kohlendioxid) aufgefangen und in einer weiteren Kaverne - CO₂-Kaverne - unter Überdruck gespeichert wird, dass die CO₂-Kaverne, in welcher das CO₂ gespeichert wird, zur Aufrechterhaltung eines Überdrucks mit einem Inertgas, insbesondere mit N₂ (Stickstoff) bedruckt wird und dass die DME-Kaverne, in welcher das DME gespeichert wird, und die CO₂-Kaverne, in welcher das CO₂ gespeichert wird, mit dem selben Inertgas bedruckt werden und miteinander fluidverbunden sind, so dass das zur Druckbeaufschlagung verwendete Inertgas zwischen den beiden Kavernen strömen kann.

Bei dem erfindungsgemäßen Verfahren wird als Energieträger DME (Dimethylether) in flüssiger Form in einer Kaverne - DME-Kaverne - gespeichert wird. Dabei erfolgt die Speicherung des DME vorzugsweise bei einem Druck von wenigstens 16 MPa. Ebenso kann vorgesehen sein, dass das DME bei einer Temperatur von wenigstens 30 °C, insbesondere wenigstens 35 °C und/oder von höchstens 60 °C, insbesondere höchstens 50 °C gespeichert wird, wobei die Speichertemperatur bevorzugt bei 40 °C ± 3 °C liegt. Mit anderen Worten erfolgt zweckmäßiger Weise die Speicherung des DME zu den üblichen Speicherbedingungen in einer Kaverne.

Dem liegt die Überlegung zugrunde, als Energieträger DME in flüssiger Form zu speichern. DME ist bei Standardbedingungen ein farb- und geruchloses Gas, welches sich aus grünem Methanol und auch direkt aus CO₂ und Wasserstoff herstellen lässt. Bei den oben genannten repräsentativen Druck- und Temperaturverhältnissen innerhalb einer Kaverne (16 MPa, 40 °C) liegt DME als Flüssiggas - ähnlich LPG - vor. Dadurch, dass DME im flüssigen Zustand gespeichert wird, wird eine enorm hohe volumetrische Energiedichte erzielt, die um ein mehrfaches höher liegt als die volumetrische Energiedichte von beispielsweise Erdgas. Die nachfolgend eingeblendete Tabelle zeigt die benötigten Volumina verschiedener Energieträger, um die oben genannte Lücke an benötigter Speicherkapazität in Höhe von 36 TWh zu speichern.

| **ENERGIETRÄGER** | **METHAN** | **WASSERSTOFF** | **DME** |
|---|---|---|---|
| **VOLUMEN / MIO. M³** | 20.1 | 95.4 | 6.8 |
| **ANZAHL KAVERNEN** | 40 | 190 | 14 |

Dabei bietet DME den Vorteil, dass die Verflüssigung auch bei moderaten Temperaturen einfach durchzuführen ist, und DME nicht giftig oder umweltgefährdend ist, was es zu einem äußerst attraktiven Speichermedium macht. Schließlich ist DME im Vergleich zu reinem Wasserstoff vergleichsweise einfach zu transportieren.

Die Speicherung von flüssigem DME in Kavernen bietet darüber hinaus die Möglichkeit, die bestehende Infrastruktur weiter zu nutzen beziehungsweise zu erweitern. Vor allem im Norden Deutschlands ist eine Nutzung zur Speicherung von Offshore-Windenergie oder aus den Niederlanden importierter Energie denkbar.

Dabei wird zur Aufrechterhaltung eines Überdrucks in der DME-Kaverne das DME mittels eines Inertgases, insbesondere mittels N₂ (Stickstoff) bedruckt beziehungsweise mit einem Druck beaufschlagt wird.

Ferner ist gemäß einer weiteren Ausführungsform des erfindungsgemäßen Verfahrens vorgesehen, dass in der DME-Kaverne gespeichertes DME ausgespeichert und als Brennstoff bei endothermen Produktionsprozessen und/oder bei der Stromherstellung und/oder zur Herstellung von Wasserstoff via Reformierung eingesetzt wird, wobei freigesetztes CO₂ (Kohlendioxid) aufgefangen und in einer weiteren Kaverne - CO₂-Kaverne - unter Überdruck gespeichert wird.

Erfindungsgemäß wird das DME also als direkter Brennstoff eingesetzt, der bevorzugt ohne eine Reformierung unmittelbar verbrannt wird, um die bei endothermen Produktionsprozessen und/oder bei der Stromherstellung erforderliche Energie zur Verfügung zu stellen. Ebenso kann das DME zur Herstellung von Wasserstoff via Reformierung eingesetzt werden gemäß der Formel

DME + 3 H₂O -> 6 H₂ + 2 CO₂.

In all diesen Prozessen wird CO₂ freigesetzt, das aufgefangen und in der CO₂-Kaverne gespeichert wird. Zur Abtrennung des CO₂ aus dem bei der Verbrennung des Brennstoffs und/oder beim endothermen Produktionsprozess entstehenden Rauchgas kann beispielsweise eine entsprechende CO₂-Abscheidungsvorrichtung vorgesehen sein. Die CO₂-Abtrennung kann beispielsweise mit Polyethylenglykoldimethylether oder DME als Waschmittel betrieben werden. Alternativ kommt eine CO₂-Abtrennung durch chemische Wäsche, insbesondere durch Aminwäsche in ein oder zwei Stufen und/oder durch physikalische Wäsche, insbesondere auf Basis von Methanol und/oder durch ein Membranverfahren und/oder im Absorbtionsverfahren erfolgen.

Dabei wird die CO₂-Kaverne, in welcher das CO₂ gespeichert wird, zur Aufrechterhaltung eines Überdrucks mit einem Inertgas, insbesondere mit N₂ (Stickstoff) bedruckt.

Wesentlich ist, dass die DME-Kaverne, in welcher das DME gespeichert wird, und die CO₂-Kaverne, in welcher das CO₂ gespeichert wird, mit demselben Inertgas bedruckt werden, so dass das Inertgas zur Druckbeaufschlagung sowohl der DME-Kaverne, als auch der CO₂-Kaverne eingesetzt werden kann.

Die Füllstände der beiden Kavernen werden sich häufig gegenläufig verhalten. Wird beispielsweise DME aus der DME-Kaverne ausgespeichert und genutzt, fällt dabei CO₂ an, welches in der CO₂-Kaverne eingespeichert werden muss. Damit wird sich bei der Ausspeicherung von DME der Füllstand der DME-Kaverne verringern, gleichzeitig aber der Füllstand in der CO₂-Kaverne erhöhen, so dass dort weniger Inertgas benötigt wird, welches der DME-Kaverne zugeführt werden kann, um den niedrigeren Füllgrad auszugleichen. Eine Verbindung/Verschaltung beider Kavernen im Bereich des Inertgases optimiert daher dessen Nutzung und führt zu einer Reduzierung der Betriebskosten.

Dabei ist es nicht notwendig, die beiden Kavernen direkt miteinander fluidzuverbinden. Es ist auch möglich, die DME-Kaverne und die CO₂-Kaverne mit einem gemeinsamen Inertgas-Speicher zu verbinden, so dass die Kavernen über den Inertgas-Speicher indirekt fluidverbunden sind. Das Befüllen der Kavernen mit Inertgas beziehungsweise das Entleeren derselben wird bevorzugt durch eine oberirdische Steuer- und Regelungseinheit vorgenommen.

Gemäß einer Ausführungsform der Erfindung ist vorgesehen, dass DME bei einer Ausspeicherung aus der DME-Kaverne gereinigt wird. Hierzu kann das DME über eine Filteranlage gereinigt werden, um große Salz- und Steinpartikel aus dem gespeicherten DME abzutrennen. Ebenso kann das DME zur Reinigung teilweise verdampft und so in die Gasphase gebracht werden, um das DME von allen gelösten Salzen zu befreien. Eine solche Teilverdampfung erfolgt bevorzugt nach einer Reinigung in der Filteranlage.

Das nicht verdampfte DME wird in weiterer Ausgestaltung der Erfindung mit Wasser gemischt und destillativ aufgereinigt, wobei die gelösten Salze insbesondere über das Wasser aus der Destillation entfernt werden.

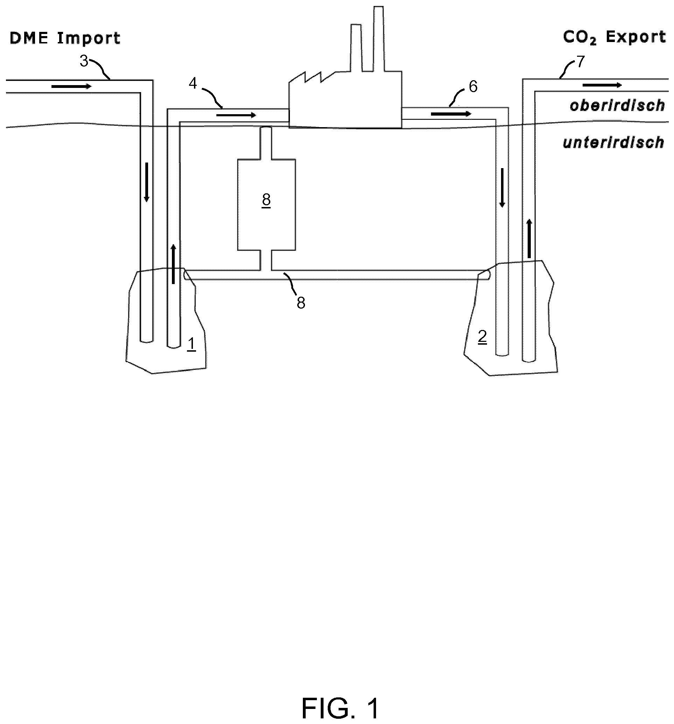

In der Figur 1 ist eine Prinzipskizze einer Anlage dargestellt, um das erfindungsgemäße Verfahren mit einer verschalteten Nutzung zweier Kavernen zur Speicherung von DME und CO₂ durchzuführen.

Die Anlage umfasst zwei Kavernen, wobei die eine Kaverne - die DME-Kaverne 1 - zur Speicherung von DME (Dimethylether) in flüssiger Form als Energieträger dient, und die andere Kaverne - die CO₂-Kaverne 2 - zur Speicherung von CO₂ (Kohlendioxid) dient. In die DME-Kaverne 1 kann flüssiges DME über eine DME-Speiseleitung 3 eingebracht werden und dort bei einem Druck von 16 MPa und einer Temperatur von 40 °C gespeichert werden. An die DME-Kaverne 1 ist eine DME-Ausspeiseleitung 4 angeschlossen, über die DME aus der DME-Kaverne 1 ausgespeist und zur Nutzung einer Anlage 5 zugeführt werden kann. Die Anlage 5 kann beispielsweise ein Kraftwerk sein, in welcher DME zur Befeuerung einer Gasturbine verbrannt wird, oder eine Anlage zur Durchführung eines endothermen Produktionsprozesses, bei welchem die thermische Energie durch Verbrennung von DME zur Verfügung gestellt wird. Ebenso kann die Anlage 5 eine Reformieranlage sein, in welcher aus DME Wasserstoff gemäß der Formel

DME + 3 H₂O -> 6 H₂ + 2 CO₂

hergestellt wird.

In ähnlicher Weise kann die CO₂-Kaverne 2 über eine CO₂-Speiseleitung 6 mit CO₂ befüllt werden. Hier ist die CO₂-Speiseleitung 6 mit der Anlage 5 verbunden, um dort bei der Verbrennung oder Reformierung des DME freigeschaltetes und aufgefangenes CO₂ von der Anlage 5 direkt der CO₂-Kaverne 2 zuzuführen. Des Weiteren ist die CO₂-Kaverne 2 mit einer CO₂-Ausspeiseleitung 7 versehen, über welche CO₂ aus der CO₂-Kaverne 2 geführt werden kann, um beispielsweise zu einer Anlage zur DME-Herstellung transportiert zu werden und so einen geschlossenen CO₂-Kreislauf zu bilden.

Die DME-Kaverne 1 und die CO₂-Kaverne 2 sind über eine Inertgasleitung 8 und einen daran angeschlossenen Inertgas-Speicher 9 miteinander verbunden, über welche den Kavernen ein Inertgas zur Bedruckung der Kavernen zugeführt werden kann.

Wenn die DME-Kaverne 1 über die Speiseleitung 3 mit flüssigem DME befüllt wird, steigt der DME-Füllstand in der DME-Kaverne 1, und das in der DME-Kaverne 1 enthaltene Inertgas wird in entsprechendem Maß aus der DME-Kaverne 1 herausgeleitet und dem Inertgas-Speicher 9 und/oder der CO₂-Kaverne 2 zugeführt.

Wenn DME über die DME-Ausspeiseleitung 7 der Anlage 5 zugeführt wird, sinkt der DME-Füllstand in der DME-Kaverne 1, so dass Inertgas nachgefüllt werden muss. Das Nachfüllen erfolgt über den Inertgas-Speicher 9, das Inertgas kann aber auch direkt von der CO₂-Kaverne 2 zugeführt werden. In der CO₂-Kaverne 2 steigt nämlich der Füllstand an CO₂, da das CO₂, welches in der Anlage 5 bei der Verbrennung/Reformierung von DME frei wird, aufgefangen und der CO₂-Kaverne 2 über die CO₂-Speiseleitung 6 eingespeist wird. Zur Steuerung des gesamten Vorgangs ist zweckmäßiger Weise eine überirdische Steuer- und Regelungseinrichtung vorgesehen.

### Bezugszeichenliste

- 1: DME-Kaverne
- 2: CO₂-Kaverne
- 3: DME-Speiseleitung
- 4: DME-Ausspeiseleitung
- 5: Anlage
- 6: CO₂-Speiseleitung
- 7: CO₂-Ausspeiseleitung
- 8: Inertgasleitung
- 9: Inertgas-Speicher

## Patentansprüche

1. Verfahren zur Speicherung eines Energieträgers, bei dem als Energieträger DME (Dimethylether) in flüssiger Form in einer Kaverne - DME-Kaverne (1) - gespeichert wird, **dadurch gekennzeichnet, dass** zur Aufrechterhaltung eines Überdrucks in der DME-Kaverne (1) das DME mittels eines Inertgases, insbesondere mittels N₂ (Stickstoff), bedruckt wird, dass in der DME-Kaverne (1) gespeichertes DME ausgespeichert und als Brennstoff bei endothermen Produktionsprozessen und/oder bei der Stromherstellung und/oder zur Herstellung von Wasserstoff via Reformierung eingesetzt wird, wobei freigesetztes CO₂ (Kohlendioxid) aufgefangen und in einer weiteren Kaverne - CO₂-Kaverne (2) - unter Überdruck gespeichert wird, dass die CO₂-Kaverne (2), in welcher das CO₂ gespeichert wird, zur Aufrechterhaltung eines Überdrucks mit einem Inertgas, insbesondere mit N₂ (Stickstoff), bedruckt wird und dass die DME-Kaverne (1), in welcher das DME gespeichert wird, und die CO₂-Kaverne (2), in welcher das CO₂ gespeichert wird, mit dem selben Inertgas bedruckt werden und miteinander fluidverbunden sind, so dass das zur Druckbeaufschlagung verwendete Inertgas zwischen den beiden Kavernen strömen kann.

2. Verfahren nach Anspruch 1, **dadurch gekennzeichnet, dass** die Speicherung des DME bei einem Druck von wenigstens 16 MPa erfolgt.

3. Verfahren nach einem der Ansprüche 1 und 2, **dadurch gekennzeichnet, dass** das DME bei einer Temperatur von wenigstens 30 °C, insbesondere wenigstens 35 °C und/oder von höchstens 60 °C, insbesondere höchstens 50 °C gespeichert wird, wobei die Speichertemperatur bevorzugt bei
40 °C ± 3 °C liegt.

4. Verfahren nach einem der vorherigen Ansprüche, **dadurch gekennzeichnet, dass** die DME-Kaverne (1) und die CO₂-Kaverne (2) mit einem gemeinsamen Inertgas-Speicher (9) verbunden sind, so dass die Kavernen über den Inertgas-Speicher (9) miteinander fluidverbunden sind.

5. Verfahren nacheinem der vorherigen Ansprüche , **dadurch gekennzeichnet, dass** während der Ausspeicherung von DME aus der DME-Kaverne (1) und der gleichzeitigen Einspeicherung von CO₂ in der CO₂-Kaverne (2) Inertgas der sich mit CO₂ füllenden CO₂-Kaverne (2) entnommen und der sich leerenden DME-Kaverne (1) zugeführt wird.

6. Verfahren nach einem der vorherigen Ansprüche, **dadurch gekennzeichnet, dass** das DME bei einer Ausspeicherung aus der DME-Kaverne (1) gereinigt wird.

7. Verfahren nach Anspruch 6, **dadurch gekennzeichnet, dass** das DME über eine Filteranlage gereinigt wird, um große Salz- und Steinpartikel aus dem ausgespeicherten DME abzutrennen.

8. Verfahren nach Anspruch 6 oder Anspruch 7, **dadurch gekennzeichnet, dass** das ausgespeicherte DME zur Reinigung teilweise verdampft und so in die Gasphase gebracht wird, um das DME von allen gelösten Salzen zu befreien.

9. Verfahren nach Anspruch 8, **dadurch gekennzeichnet, dass** das nicht verdampfte DME mit Wasser gemischt und destillativ aufgereinigt wird, wobei die gelösten Salze insbesondere über das Wasser aus der Destillation entfernt werde

## Claims

1. A method for storing an energy carrier, in which DME (dimethyl ether) is stored in liquid form in a cavern-the DME cavern (1)-as the energy carrier, **characterized in that**, to maintain an overpressure in the DME cavern (1), the DME is pressurized with an inert gas, in particular with N₂ (nitrogen), that DME stored in the DME cavern (1) is withdrawn and used as fuel in endothermic production processes and/or in electricity generation and/or for the production of hydrogen via reforming, wherein released CO₂ (carbon dioxide) is captured and stored under overpressure in a further cavern-the CO₂ cavern (2)-that the CO₂ cavern (2), in which the CO₂ is stored, is pressurized with an inert gas, in particular with N₂ (nitrogen), and that the DME cavern (1), in which the DME is stored, and the CO₂ cavern (2), in which the CO₂ is stored, are pressurized with the same inert gas and are fluidly connected to one another, so that the inert gas used for pressurization can flow between the two caverns.

2. The method according to claim 1, **characterized in that** the DME is stored at a pressure of at least 16 MPa.

3. A method according to one of claims 1 and 2, **characterized in that** the DME is stored at a temperature of at least 30 °C, in particular at least 35 °C, and/or at most 60 °C, in particular at most 50 °C, wherein the storage temperature is preferably 40 °C ± 3 °C.

4. A method according to one of the preceding claims, **characterized in that** the DME cavern (1) and the CO₂ cavern (2) are connected to a common inert gas storage (9), such that the caverns are fluidly connected to one another via the inert gas storage (9).

5. A method according to any of the preceding claims, **characterized in that**, during the withdrawal of DME from the DME cavern (1) and the simultaneous injection of CO₂ into the CO₂ cavern (2), inert gas is withdrawn from the CO₂ cavern (2) as it fills with CO₂ and is fed to the emptying DME cavern (1).

6. A method according to one of the preceding claims, **characterized in that** the DME is purified upon withdrawal from the DME cavern (1).

7. A method according to claim 6, **characterized in that** the DME is purified via a filtration system to separate large salt and rock particles from the withdrawn DME.

8. A method according to claim 6 or claim 7, **characterized in that** the withdrawn DME is partially vaporized for purification and thus brought into the gas phase to remove all dissolved salts from the DME.

9. A method according to claim 8, **characterized in that** the non-evaporated DME is mixed with water and purified by distillation, wherein the dissolved salts are removed from the distillation product, in particular via the water.

## Revendications

1. Procédé de stockage d'un vecteur énergétique, dans lequel du DME (diméthyléther) est stocké sous forme liquide dans une caverne - la caverne de DME (1) - comme vecteur éngergetique **caractérisé en ce que**, pour maintenir une surpression dans la caverne de DME (1), le DME est pressurisé au moyen d'un gaz inerte, en particulier au moyen de N₂ (azote), que le DME stocké dans la caverne de DME (1) est déstocké et utilisé comme combustible dans des processus de production endothermiques et/ou pour la production d'électricité et/ou pour la production d'hydrogène par reformage, le CO₂ (dioxyde de carbone) est capté et stocké sous surpression dans une autre cavité - la cavité de CO₂ (2) -, que la cavité de CO₂ (2), dans laquelle le CO₂ est stocké, est mise sous surpression avec un gaz inerte, en particulier avec du N₂ (azote), et que la caverne de DME (1), dans laquelle le DME est stocké, et la caverne de CO₂ (2), dans laquelle le CO₂ est stocké, sont pressurisées avec le même gaz inerte et sont reliées entre elles par un circuit de fluide, de sorte que le gaz inerte utilisé pour la pressurisation puisse circuler entre les deux cavités.

2. Procédé selon la revendication 1, **caractérisé en ce que** le stockage du DME s'effectue à une pression d'au moins 16 MPa.

3. Procédé selon l'une des revendications 1 et 2, **caractérisé en ce que** le DME est stocké à une température d'au moins 30 °C, en particulier d'au moins 35 °C, et/ou d'au plus 60 °C, en particulier d'au plus 50 °C, la température de stockage étant de préférence comprise entre 40 °C ± 3 °C.

4. Procédé selon l'une des revendications précédentes, **caractérisé en ce que** la cavité de DME (1) et la cavité de CO₂ (2) sont reliées à un réservoir commun de gaz inerte (9), de sorte que les cavités sont reliées entre elles par voie fluide via le réservoir de gaz inerte (9).

5. Procédé selon l'une des revendications précédentes, **caractérisé en ce que**, pendant le déstockage de DME de la cavité de DME (1) et le stockage simultané de CO₂ dans la cavité de CO₂ (2), du gaz inerte est prélevé de la cavité de CO₂ (2) quiseremplit de CO₂ et est acheminé vers la cavité de DME (1) qui se vide.

6. Procédé selon l'une des revendications précédentes, **caractérisé en ce que** le DME est purifié lors de son soutirage de la caverne de DME (1).

7. Procédé selon la revendication 6, **caractérisé en ce que** le DME est purifié à l'aide d'une installation de filtration afin de séparer les grosses particules de sel et de calcaire du DME extrait.

8. Procédé selon la revendication 6 ou la revendication 7, **caractérisé en ce que** le DME extrait est partiellement évaporé à des fins de purification et ainsi mis en phase gazeuse afin de débarrasser le DME de tous les sels dissous.

9. Procédé selon la revendication 8, **caractérisé en ce que** le DME non évaporé est mélangé à de l'eau et purifié par distillation, les sels dissous étant notamment éliminés par l'eau issue de la distillation.
